# FASCICULE DE BREVET EUROPEEN

(11) **EP 0 559 504 B1**
(45) Date de publication et mention de la délivrance du brevet: **06.11.1996**
(21) Numéro de dépôt: 93400237.9
(22) Date de dépôt: 01.02.1993
(51) Int. Cl.: F16C 39/06

(54) **Palier électromagnétique**
Elektromagnetisches Lager
Electromagnetic bearing

(30) Priorité: 05.02.1992 FR 9201278
(43) Date de publication de la demande: 08.09.1993
(73) Titulaire: ALCATEL CIT, F-75008 Paris (FR)
(72) Inventeur: Lemarquand, Guy, F-74370 Villaz (FR); Pierrejean, Didier, F-74320 Sevrier (FR); Perrillat-Amede, Denis, F-74000 Annecy (FR)
(74) Mandataire: Gosse, Michel

(56) Documents cités:
- FR-A- 2 239 038
- FR-A- 2 322 294
- US-A- 3 458 239
- US-A- 3 823 990

## Description

La présente invention concerne un palier électromagnétique. Le brevet français 2322294 décrit un palier électromagnétique comportant un élément rotorique lié au mobile à supporter en rotation et un élément statorique comportant huit noyaux, chacun équipé d'une bobine d'action et d'une bobine de détection. Il est en effet très avantageux que les détecteurs de position soient associés au palier lui-même, car ainsi, la mesure de la position du mobile se fait dans le plan même d'action des efforts dues aux bobines d'action du palier. En outre une telle disposition entraîne une diminution de l'encombrement et du coût de l'ensemble des fonctions sustentation et détection de position.

Cependant, dans ce document, les quatre bobines d'action du palier de chaque axe Y et X sont alimentées toutes les quatre en série et non pas séparément deux par deux, de telle sorte qu'un décentrage du rotor ne peut pas être corrigé.

La présente invention a pour but de proposer un palier électromagnétique du type combiné associant les deux fonctions de détection de position et de mise en position par des bobines d'action, dans lequel les bobines de détection de position ne sont pas influencées par le flux magnétique des bobines d'action et dans lequel, bien entendu, les bobines d'action de chaque axe X et Y sont alimentées séparément demi-axe par demi-axe.

L'invention a ainsi pour objet un palier électromagnétique pour la sustentation radiale d'un rotor dans un stator, comportant un circuit magnétique comprenant une première partie rotorique solidaire dudit rotor et une deuxième partie statorique solidaire dudit stator, ladite partie statorique comportant, face à la première partie rotorique, une pluralité de noyaux magnétiques équipés, d'une part de bobines électriques de détection de position, alimentées par un courant électrique alternatif de détection et d'autre part d'enroulements électriques de sustentation alimentés par des courants de puissance, lesdits noyaux magnétiques étant répartis en quatre groupes, les quatre groupes étant appelés respectivement groupe I, groupe II, groupe III et groupe IV et se suivant les uns les autres dans l'ordre, les groupes I et III correspondant à une action radiale selon un axe Y et respectivement dans un sens et dans l'autre, et les groupes II et IV correspondant à une action radiale selon un axe X perpendiculaire à l'axe Y et respectivement dans un sens et dans l'autre, chaque noyau de chaque groupe étant équipé d'une bobine de détection de position, les bobines des noyaux d'un groupe étant reliées en série, le sens de l'enroulement d'une bobine sur chaque noyau étant tel que, à un instant déterminé quelconque, le flux magnétique produit par le courant alternatif d'alimentation est de sens opposé dans les deux premiers noyaux du groupe, chaque groupe étant en outre équipé d'enroulements électriques de sustentation disposés sur les noyaux du groupe de telle sorte que, à un instant déterminé quelconque, le flux magnétique produit par le courant d'alimentation est dans le même sens et de la même valeur dans les deux premiers noyaux du groupe, caractérisé en ce que le nombre desdits noyaux magnétiques est de seize : quatre noyaux consécutifs par groupe, en ce que pour chaque groupe, le sens de l'enroulement de la bobine du troisième noyau et de la bobine du quatrième noyau est tel que, à un instant déterminé quelconque, le flux magnétique produit par le courant alternatif d'alimentation est de sens opposé dans le troisième noyau et dans le quatrième noyau, en ce que les enroulements électriques de sustentation sont disposés dans chaque groupe de telle sorte que, à un instant déterminé quelconque, le flux magnétique produit par le courant d'alimentation dans le troisième noyau et dans le quatrième noyau, produit par le courant d'alimentation, est de même valeur et de sens opposé à celui des deux premiers noyaux et 5 en ce que les enroulements électriques de sustentation de chaque groupe sont alimentés séparément.

Selon une réalisation préférée, les bobines électriques de détection de position des groupes I et III sont reliées et alimentées en série et de même, les bobines des groupes II et IV sont reliées et alimentées en série.

Selon une autre caractéristique, lesdites bobines électriques de détection sont alimentées en courant alternatif d'amplitude constante à une fréquence de préférence comprise entre 10 et 100 kHz, et chaque ensemble de deux groupes de bobines mises en série est monté dans un pont de mesure, équilibré en position centré du rotor dans le stator, selon l'axe considéré X ou Y correspondant aux deux groupes de bobines mises en série, le pont étant alimenté dans l'une de ses diagonales et l'autre diagonale étant utilisée pour mesurer la tension de déséquilibre correpondant à un décentrage.

Selon une première réalisation, chaque groupe de noyaux est équipé de deux enroulements électriques de sustentation, le premier entourant ensemble les deux premiers noyaux du groupe et le deuxième entourant ensemble les troisième et quatrième noyaux du groupe, les deux enroulements étant reliés et alimentés en série.

Selon une seconde réalisation, chaque groupe de noyaux est équipé de quatre enroulements électriques de sustentation, reliés et alimentés en série, un enroulement étant disposé sur chaque noyau du groupe.

On va maintenant donner la description n'un exemple de mise en oeuvre de l'invention en se référant au dessin annexé dans lequel:

La figure 1 est une vue schématique montrant un palier magnétique selon l'invention.

La figure 2 est une vue schématique partielle montrant une variante par rapport à la figure 1.

La figure 3 est un schéma électrique illustrant le principe de mesure pour la détection de position.

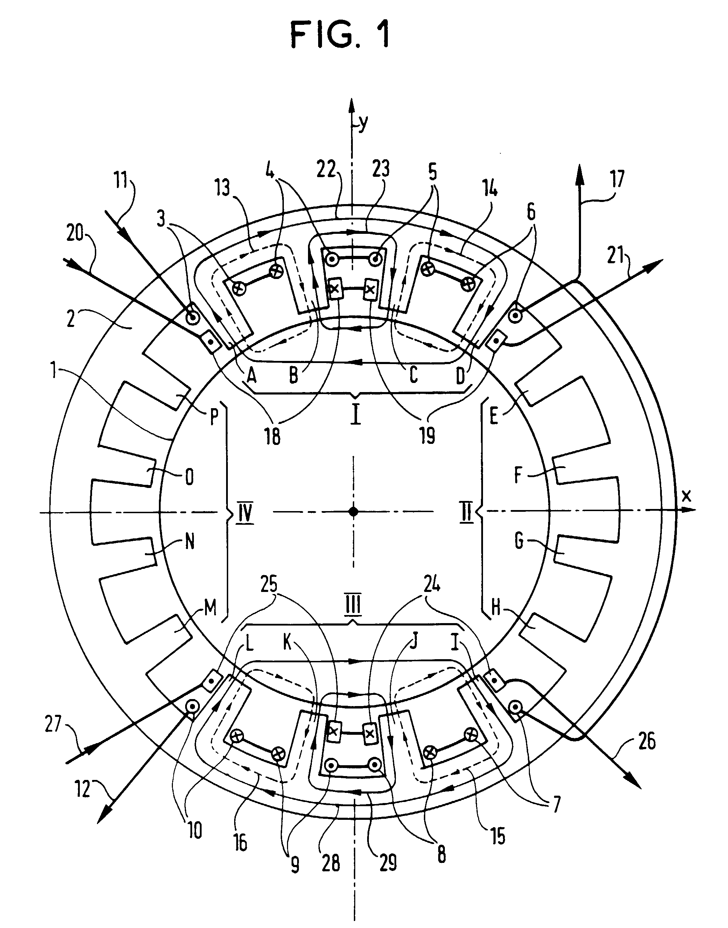

En se référant à la figure 1, le palier magnétique comprend un circuit magnétique comportant une première partie rotorique 1, bien évidemment solidaire du rotor à supporter, et une deuxième partie statorique 2, évidemment solidaire du stator de la machine.

La partie statorique 2 comporte, face à la partie rotorique 1, seize noyaux magnétiques référencés A à P. Ces noyaux magnétiques sont équipés, d'une part de bobines électriques de détection de position et d'autre part d'enroulements électriques de sustentation, de la manière qui va être dite ci-après. Tout d'abord, les seize noyaux ci-dessus référencés sont répartis en quatre groupes: le groupe I comprenant les noyaux A, B, C et D, le groupe II comprenant les noyaux E, F, G et F, le groupe III comprenant les noyaux I, J, K et L et le groupe IV comprenant les noyaux M, N, O et P.

Les groupes I et III correspondent à l'axe référencé Y sur la figure, l'alimentation des enroulements de sustentation du groupe I assurant une attraction radiale du rotor dans le sens de la flèche de l'axe Y et l'alimentation du groupe III assurant une attraction radiale du rotor dans le sens opposé à la flèche de l'axe Y.

De la même façon, les groupes II et IV correspondent à l'axe référencé X sur la figure et l'alimentation des enroulements du groupe II ou IV assurent une attraction du rotor, soit selon le sens de la flèche de l'axe X (groupe II), soit dans le sens opposé (groupe IV).

Pour la clarté de la figure, il n'a été figuré que les bobines de détection de position et les enroulements de sustentation du seul axe Y sachant que le principe de la disposition de ces bobines et enroulements est absolument identique pour les groupes II et IV de l'axe X.

Ainsi, chaque noyau A, B, C et D du groupe 1 est équipé d'une bobine électrique de détection de position : le noyau A d'une bobine 3, enroulée dans le sens des aiguilles d'une montre (en se plaçant à la place du rotor et en regardant vers le noyau considéré); le noyau B d'une bobine 4, enroulée dans le sens trigonométrique; le noyau C d'une bobine 5, enroulée dans le sens des aiguilles d'une montre et le noyau D d'une bobine 6, enroulée dans le sens trigonométrique. Ces quatre bobines 3, 4, 5 et 6 sont reliées en série et forment le groupe I qui est lui-même relié en série avec le groupe III qui comprend respectivement les bobines 7, 8, 9 et 10 montées sur les noyaux I, J, K et L et reliées elles-mêmes en série. Ces bobines 7, 8, 9 et 10 sont enroulées dans le sens d'enroulement figuré par les symboles bien connus et et déjà utilisés pour le groupe 1.

Les groupes I et III sont ainsi alimentés en série par les conducteurs 11 et 12 en courant alternatif à une fréquence de 20 kHz par exemple (de préférence entre 10 et 100 kHz).

L'important, dans le sens de l'enroulement des bobines c'est que, dans les deux premiers noyaux A et B, le flux magnétique produit par le courant alternatif d'alimentation soit, à un instant déterminé quelconque, de sens opposé. Dans ces deux noyaux A et B le flux, à un instant déterminé est par exemple dans le sens représenté par la ligne fléchée, tracée en pointillé et référencée 13. De même, pour les noyaux C et D le flux doit être de sens opposé: la ligne en pointillé référencée 14 figure le flux produit par les bobines 5 et 6 dans ces noyaux avec le sens de circulation du flux, à un instant déterminé, figuré par les flèches. En revanche, peu importe le sens respectif du flux dans les noyaux B et C, il peut être celui indiqué mais il pourrait tout aussi bien être autre. La seule chose qui importe c'est que dans A et B le flux soit en sens inverse l'un de l'autre et de même pour C et D. Il en est de même pour le groupe III: Dans I et J le sens du flux doit être respectivement en sens inverse et de même dans K et L le sens du flux doit être respectivement en sens inverse.

On a figuré par la ligne fléchée 15, tracée en pointillé, le sens du flux produit par les bobines 7 et 8 et par la ligne fléchée 16, tracée en pointillé, le sens du flux produit par les bobines 9 et 10. Sur les fils d'alimentation 11 et 12, on a placé des flèches figurant le sens du courant à un instant donné, ce sens correspond au sens du flux également indiqué par les flèches des lignes 15 et 16 compte-tenu des sens d'enroulement indiqués par les symboles ⊙ et ⊗.

On a bien compris que ce qui est important c'est que, à un instant donné, le flux magnétique dans les deux premiers noyaux de chaque groupe est en sens inverse l'un de l'autre, ainsi que pour les deux derniers noyaux de chaque groupe, et que ce résultat peut être obtenu pour d'autres sens d'enroulements que ceux figurés sur la figure 1.

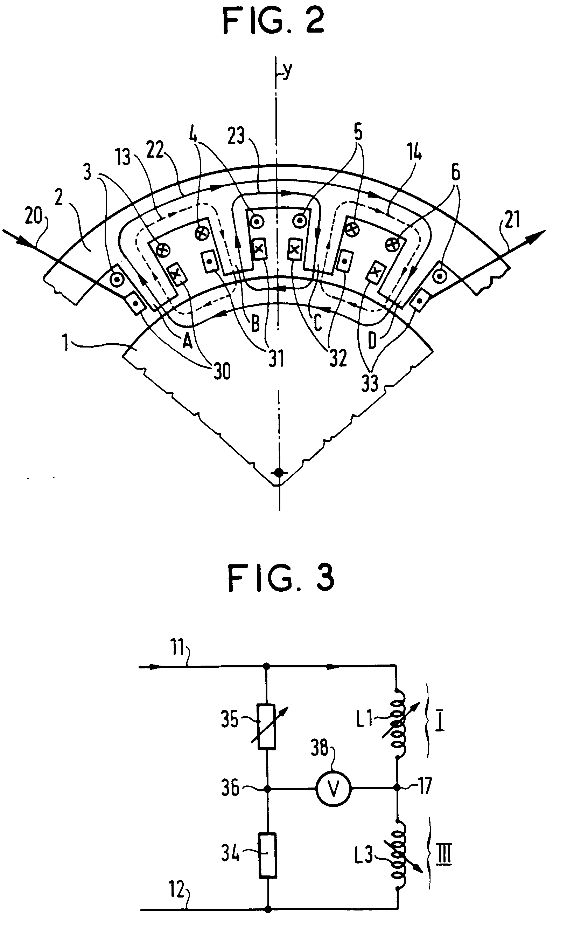

Entre les deux groupes I et III mis en série, on a fait un piquage 17 utilisé pour la mesure de position et qui sera expliquée en référence à la figure 3.

Comme il a été dit, chaque groupe possède aussi des enroulements de sustentation, alimentés indépendammment les uns des autres. La description ne sera faite que pour le groupe I sachant que c'est identique pour les trois autres. Les enroulements du groupe III sont cependant représentés sur la figure 1.

Pour les enroulements de sustentation, ce qui est important c'est que le flux magnétique produit par ces enroulements, à un instant déterminé quelconque, soit dans le même sens dans les deux premiers noyaux: A et B pour ce groupe I, et soit dans le sens opposé dans les deux autres noyaux: C et D (même sens dans C et D, opposé à celui dans A et B).

La figure 1 donne un exemple permettant d'atteindre ce résultat. La figure 2, décrite ensuite, en donne un autre exemple.

Dans la figure 1, il y a deux enroulements de sustentation référencés 18 et 19, reliés en série et alimentés par les conducteurs d'extrémité 20 et 21. L'enroulement 18 entoure ensemble les noyaux A et B et l'enroulement 19 entoure ensemble les noyaux C et D. Ils sont enroulés en sens inverse l'un de l'autre compte le montre les symboles de sens d'enroulement utilisés ici encore : 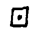 et 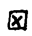 . On a seulement changé le cercle en rectangle pour distinguer les enroulements de sustentation des bobines de détection de position. Le flux magnétique produit par ces deux enroulements est représenté par les deux lignes en traits continus 22 et 23 avec le sens de circulation du flux indiqué par les flèches sur ces lignes et correspondant à un courant dans le sens indiqué également par les flèches représentées sur les conducteurs d'alimentation 11 et 12.

Ici, ce courant peut-être continu ou alternatif.

C'est identique pour les autres groupes II, III et IV. Sur le groupe III, opposé ou groupe I, on a repéré les deux enroulements 24 et 25 avec les conducteurs d'alimentation 26 et 27 et les lignes de flux 28 et 29 en traits continus.

La figure 2 est un schéma partiel montrant une variante de réalisation pour le même résultat. Ici, il y a quatre enroulements de sustentation: 30, 31, 32 et 33 c'est-à-dire un par noyau. Les deux premiers 30 et 31 sont enroulés dans le même sens et les deux suivants 32 et 33, dans le sens opposé des deux premiers. Les quatre enroulements sont reliés en série. La figure est, sauf pour les enroulements de surtentation, identique à la figure 1.

En revenant à la figure 1, et en se limitant au groupe I, puisque c'est identique pour les autres, on voit que le flux magnétique produit par les enroulements de sustentation 18 et 19 n'influence pas les bobines de détection de position. En effet le flux magnétique produit par l'enroulement de sustentation 18 se partage également dans les deux noyaux A et B, et les traverse dans le même sens; mais si l'on se place maintenant par rapport aux deux bobines 3 et 4 de détection de position on voit que le flux de sustentation traverse la bobine 3 de détection dans le même sens que le flux de détection produit par cette bobine 3 mais que pour la bobine 4 le flux de sustentation traverse cette bobine 4 de détection dans le sens inverse du flux qu'elle produit elle-même : il en résulte que, pour ces deux bobines de détection 3 et 4 reliées en série, le flux de sustentation qui les traverse est nul. Ainsi les bobines de détection ne sont pas influencées par le flux produit par les enroulements de sustentation, ce qui simplifie beaucoup le circuit électrique de détection de position dont le principe est décrit ci-après en référence à la figure 3. On a exactement la même chose pour les deux autres bobines 5 et 6 traversées positivement est négativement (par rapport au sens du flux qu'elles produisent elles-mêmes) par le flux magnétique produit par l'enroulement de sustentation 19.

Le principe de la mesure de la position du rotor par rapport au stator est maintenant expliqué en se référant à la figure 3, pour l'axe Y, sachant que pour l'axe X le principe est identique, la mesure étant faite par les bobines de détection placées sur les groupes de noyaux II et IV et mise dans un circuit électrique identique à celui de la figure 3.

Sur cette figure 3, on a représenté les bobines de détection de position du groupe I par l'inductance variable L₁ et celles du groupe III par l'inductance variable L₃. En effet, selon la position du rotor 1 par rapport au stator 2, la réluctance du circuit magnétique varie et donc aussi le coefficient de auto-induction L des bobines.

Ainsi, ces deux groupes I et III sont alimentés en série par les conducteurs d'alimentation 11 et 12 au moyen d'un courant alternatif de fréquence élevée, de l'ordre de 10 à 100 kHz. Elles sont montées dans un pont de mesure comportant une impédance 34 et une impédance réglable 35 permettant d'ajuster le pont pour obtenir l'équilibre (tension nulle dans la diagonale 17, 36 équipé d'un instrument de mesure 38) lorsque le rotor est parfaitement centré dans le stator (par rapport à l'axe Y). Selon que le rotor est décentré dans un sens ou dans l'autre, la tension mesurée par l'appareil 38 est positive ou négative et fonction de la valeur du décentrage. On commande alors en conséquence le courant dans les enroulements de sustentation du groupe I ou III selon le cas.

## Revendications

1. Palier électromagnétique pour la sustentation radiale d'un rotor dans un stator, comportant un circuit magnétique comprenant une première partie rotorique (2) solidaire dudit rotor et une deuxième partie statorique solidaire dudit stator, ladite partie statorique comportant, face à la première partie rotorique (2), une pluralité de noyaux magnétiques (A à P) équipés, d'une part de bobines électriques de détection de position (3, 4, 5, 6), alimentées par un courant électrique alternatif de détection et d'autre part d'enroulements électriques de sustentation (18, 19) alimentés par des courants de puissance, lesdits noyaux magnétiques étant répartis en quatre groupes, les quatre groupes étant appelés respectivement groupe I, groupe II, groupe III et groupe IV et se suivant les uns les autres dans l'ordre, les groupes I et III correspondant à une action radiale selon un axe Y et respectivement dans un sens et dans l'autre, et les groupes II et IV correspondant à une action radiale selon un axe X perpendiculaire à l'axe Y et respectivement dans un sens et dans l'autre, chaque noyau de chaque groupe étant équipé d'une bobine de détection de position (3, 4, 5, 6), les bobines des noyaux d'un groupe étant reliées en série, le sens de l'enroulement d'une bobine sur chaque noyau étant tel que, à un instant déterminé quelconque, le flux magnétique (13) produit par le courant alternatif d'alimentation est de sens opposé dans les deux premiers noyaux (A, B) du groupe, chaque groupe étant en outre équipé d'enroulements électriques de sustentation disposés sur les noyaux du groupe de telle sorte que, à un instant déterminé quelconque, le flux magnétique produit par le courant d'alimentation est dans le même sens et de la même valeur dans les deux premiers noyaux du groupe, caractérisé en ce que le nombre desdits noyaux magnétiques est de seize : quatre noyaux consécutifs par groupe, en ce que pour chaque groupe, le sens de l'enroulement de la bobine du troisième noyau (C) et de la bobine du quatrième noyau (D) est tel que, à un instant déterminé quelconque, le flux magnétique produit par le courant alternatif d'alimentation est de sens opposé dans le troisième noyau et dans le quatrième noyau, en ce que les enroulements électriques de sustentation sont disposés dans chaque groupe de telle sorte que, à un instant déterminé quelconque, le flux magnétique produit par le courant d'alimentation dans le troisième noyau (C) et dans le quatrième noyau (D), produit par le courant d'alimentation, est de même valeur et de sens opposé à celui des deux premiers noyaux (A, B) et en ce que les enroulements électriques de sustentation de chaque groupe sont alimentés séparément.

2. Palier électromagnétique selon la revendication 1, caractérisé en ce que les bobines électriques de détection de position (3 à 10) des groupes I et III sont reliées et alimentées en série et de même, les bobines des groupes II et IV sont reliées et alimentées en série.

3. Palier électromagnétique selon la revendication 1, caractérisé en ce que chaque groupe de noyaux est équipé de deux enroulements électriques de sustentation (18, 19), le premier (18) entourant ensemble les deux premiers noyaux (A, B) du groupe et le deuxième (19) entourant ensemble les troisième (C) et quatrième (D) noyaux du groupe, les deux enroulements étant reliés et alimentés en série.

4. Palier électromagnétique selon la revendication 1, caractérisé en ce que chaque groupe de noyaux est équipé de quatre enroulements électriques de sustentation (30 à 33) reliés et alimentés en série, un enroulement étant disposé sur chaque noyau du groupe.

5. Palier électromagnétique selon la revendication 2, caractérisé en ce que lesdites bobines électriques de détection sont alimentées en courant alternatif d'intensité d'amplitude fixe, et en ce que chaque ensemble de deux groupes de bobines (I, III) mis en série est monté dans un pont de mesure, équilibré en position centré du rotor dans le stator, selon l'axe considéré X ou Y correspondant aux deux groupes de bobines mises en série, le pont étant alimenté dans l'une de ses diagonales (11, 12) et l'autre diagonale (17, 36) étant utilisée pour mesurer la tension (38) de déséquilibre correspondant à un décentrage.

6. Palier électromagnétique selon la revendication 5, caractérisé en ce que ledit courant alternatif de détection de position est à une fréquence comprise entre 10 et 100 kHZ.

## Patentansprüche

1. Elektromagnetisches Lager, um einen Rotor in einem Stator radial in der Schwebe zu halten, mit einem Magnetkreis, der einen ersten, rotorischen Bereich (2), der mit dem Rotor verbunden ist, und einen zweiten, statorischen Bereich aufweist, der mit dem Stator verbunden ist, wobei der statorische Bereich gegenüber dem rotorischen Bereich (2) zahlreiche Magnetkerne (A bis P) enthält, die einerseits elektrische Lageerfassungsspulen (3, 4, 5, 6), die mit einem elektrischen Erfassungs-Wechselstrom gespeist werden, und andererseits elektrische Schwebewicklungen (18, 19) tragen, die Starkströme empfangen, wobei die Magnetkerne in vier Gruppen aufgeteilt sind, nämlich eine Gruppe I, eine Gruppe II, eine Gruppe III und eine Gruppe IV, und in dieser Reihenfolge aufeinanderfolgen, wobei die Gruppen I und III einer radialen Kraftwirkung in Richtung einer Y-Achse oder in Gegenrichtung dazu entsprechen und die Gruppen II und IV einer radialen Kraftwirkung entlang einer zur Y-Achse senkrechten X-Achse oder in Gegenrichtung dazu entsprechen, wobei jeder Kern jeder Gruppe eine Lageerfassungsspule (3, 4, 5, 6) trägt und diese Spulen der Kerne einer Gruppe in Reihe geschaltet sind, wobei der Wicklungssinn einer Spule auf jedem Kern so gewählt ist, daß in einem beliebigen gegebenen Augenblick der von dem Speisewechselstrom erzeugte Magnetfluß (13) in den beiden ersten Kernen (A, B) der Gruppe entgegengesetzte Richtung hat, wobei jede Gruppe außerdem elektrische Schwebewicklungen auf den Kernen der Gruppe aufweist, derart, daß in einem beliebigen gegebenen Zeitpunkt der von dem eingespeisten Schwebestarkstrom erzeugte Magnetfluß die gleiche Richtung und den gleichen Wert in den beiden ersten Kernen der Gruppe besitzt, dadurch gekennzeichnet, daß sechzehn Magnetkerne vorgesehen sind, und zwar vier aufeinanderfolgende Kerne je Gruppe, daß für jede Gruppe der Wicklungssinn der Spule des dritten Kerns (C) und der Spule des vierten Kerns (D) so gewählt ist, daß in einem beliebigen bestimmten Zeitpunkt der vom Speisewechselstrom erzeugte Magnetfluß im dritten Kern (C) und im vierten Kern (D) den gleichen Wert und entgegengesetzte Richtung zu den Magnetflüssen in den beiden ersten Kernen (A, B) aufweist, und daß die elektrischen Schwebewicklungen jeder Gruppe getrennt gespeist werden.

2. Elektromagnetisches Lager nach Anspruch 1, dadurch gekennzeichnet, daß die elektrischen Lageerfassungsspulen (3 bis 10) der Gruppen I und III in Reihe verbunden und gespeist werden und daß in gleicher Weise die Spulen der Gruppen II und IV in Reihe verbunden und gespeist werden.

3. Elektromagnetisches Lager nach Anspruch 1, dadurch gekennzeichnet, daß jede Gruppe von Kernen zwei elektrische Schwebewicklungen (18, 19) besitzt, von denen die erste (18) die beiden ersten Kerne (A, B) der Gruppe und die zweite (19) den dritten und den vierten Kern (C, D) der Gruppe gemeinsam umgibt und daß die beiden Wicklungen in Serie geschaltet und gespeist werden.

4. Elektromagnetisches Lager nach Anspruch 1, dadurch gekennzeichnet, daß jede Gruppe von Kernen vier elektrischen Schwebewicklungen (30 bis 33) aufweist, die in Serie verbunden und gespeist werden, wobei eine Wicklung auf jedem Kern der Gruppe sitzt.

5. Elektromagnetisches Lager nach Anspruch 2, dadurch gekennzeichnet, daß die elektrischen Lageerfassungsspulen mit einem Wechselstrom einer konstanten Stärke gespeist werden und daß jede Serienschaltung von zwei Spulengruppen (I, III) in eine Meßbrücke eingefügt ist, die in der konzentrischen Lage des Rotors bezüglich des Stators in X- oder Y-Richtung entsprechend den beiden in Serie geschalteten Spulengruppen abgeglichen ist, wobei die Brücke in einer ihrer Diagonalen (11, 12) gespeist wird, während die andere Diagonale (17-36) zur Messung der einer exzentrischen Lage entsprechenden Brückenspannung (38) verwendet wird.

6. Elektromagnetisches Lager nach Anspruch 5, dadurch gekennzeichnet, daß der Lageerfassungs-Wechselstrom eine Frequenz zwischen 10 und 100 kHz besitzt.

## Claims

1. An electromagnetic bearing for radially suspending a rotor in a stator, the bearing including a magnetic circuit comprising a rotor first portion (2) integral with said rotor, and a stator second portion integral with said stator, said stator portion including a plurality of magnetic cores (A to P) facing the rotor first portion (2) and equipped both with position-detection electric coils (3, 4, 5, 6), powered by a detection AC electric current, and also with suspension electric windings (18, 19) powered by power currents, said magnetic cores being divided into four groups, the four groups being referred to respectively as group I, group II, group III, and group IV and succeeding one another in that order, groups I and III corresponding to radial action along a Y-axis and in respective opposite directions, and groups II and IV corresponding to radial action along an X-axis perpendicular to the Y-axis and in respective opposite directions, each core in each group being equipped with a position-detection coil (3, 4, 5, 6), the coils on the cores in any one group being connected together in series, the respective winding directions of the coils on the cores being such that, at any determined time, the magnetic flux (13) produced by the AC powering current is in opposite directions in the first two cores (A, B) of the group, each group being further equipped with suspension electric windings disposed on the cores of the group such that, at any determined time, the magnetic flux produced by the powering current is in the same direction and has the same value in the first two cores of the group,
said bearing being characterized in that the number of magnetic cores is sixteen: four consecutive cores per group, in that for each group the winding directions of the coil of the third core (C) and of the coil of the fourth core (D) are such that, at any determined time, the magnetic flux produced by the AC powering current is in opposite directions in the third core and in the fourth core, and in that the suspension electric windings are disposed in each group such that, at any determined time, the magnetic flux produced by the powering current in the third core (C) and in the fourth core (D), produced by the powering current, has the same value and is in opposite directions to that of the first two cores (A, B), and in that the suspension electric windings in each group are powered separately.

2. An electromagnetic bearing according to claim 1, characterized in that the position-detection electric coils (3 to 10) in groups I and III are connected together and powered in series, and, in the same way, the coils in groups II and IV are connected together and powered in series.

3. An electromagnetic bearing according to claim 1, characterized in that each group of cores is equipped with two suspension electric windings (18, 19), the first winding (18) surrounding the first two cores (A, B) of the group together, and the second winding (19) surrounding the third (C) and fourth (D) cores of the group together, the two windings being connected together and powered in series.

4. An electromagnetic bearing according to claim 1, characterized in that each group of cores is equipped with four suspension electric windings (30 to 33) connected together and powered in series, one winding being disposed on each core of the group.

5. An electromagnetic bearing according to claim 2, characterized in that said position-detection coils are powered by AC of fixed amplitude, and in that each set of two groups of coils (I, III) connected in series is mounted in a measuring bridge which is balanced when the rotor is centered in the stator along the X-axis or the Y-axis corresponding to the two groups of coils connected in series, the bridge being powered via one of its diagonals (11, 12), with the other diagonal (17, 36) being used to measure the imbalance voltage (38) corresponding to the rotor moving off-center.

6. An electromagnetic bearing according to claim 5, characterized in that said AC position-detection current is at a frequency lying in the range 10 kHz to 100 kHz.
